# EUROPÄISCHE PATENTSCHRIFT

(11) **EP 2 667 043 B1**
(45) Veröffentlichungstag und Bekanntmachung des Hinweises auf die Patenterteilung: **15.06.2016**
(21) Anmeldenummer: 12169057.2
(22) Anmeldetag: 23.05.2012
(51) Int. Cl.: F16B 37/06

(54) **Blindnietelement**
Blind rivet element
Elément de rivet aveugle

(43) Veröffentlichungstag der Anmeldung: 27.11.2013
(73) Patentinhaber: Dregischan, Simone, 65347 Eltville (DE); Vetter, Alexandra, 65719 Hofheim am Taunus (DE)
(72) Erfinder: Schruff, Herbert, 65375 Oestrich-Winkel (DE)
(74) Vertreter: Quermann, Helmut

(56) Entgegenhaltungen:
- EP-A1- 1 918 596
- DE-A1-102004 042 478
- DE-U1-202004 021 831
- US-A1- 2010 040 433

## Beschreibung

Die Erfindung betrifft ein Blindnietelement mit einem Setzkopf und einem Schaft, wobei der Schaft im Bereich seines dem Setzkopf abgewandten Endes ein Innengewinde aufweist oder eine Aufnahme für einen Gewindebolzen aufweist, sowie benachbart dem Setzkopf einen Schaftabschnitt aufweist, in dessen Bereich der Schaft in ein Durchgangsloch eines mit dem Blindnietelement zu verbindenden Gegenstands einführbar ist, sowie benachbart dem Innenge-winde bzw. der Aufnahme für den Gewindebolzen einen Verformungsabschnitt zur Ausbildung eines Schließkopfes zur Anlage am Gegenstand beim Setzen des Blindnietelements aufweist.

Die Erfindung betrifft ferner eine Anordnung eines Blindnietelementes und eines ein Durchgangsloch aufweisenden Gegenstandes zur Aufnahme des Blindnietelements.

Derartige Blindnietelemente sind beispielsweise als Blindnietmutter (wie beispielsweise in der EP 1 918 596 A1 und der US 3,789,728 offenbart) oder als Blindnietgewindebolzen (wie beispielsweise in der EP 1 918 596 A1 offenbart) ausgebildet.

Blindnietelemente haben sich für Befestigungsaufgaben bewährt, bei denen eine Schraubverbindung im Bereich dünnwandiger Materialien, beispielsweise Blechen, erforderlich ist, in die normalerweise kein belastbares Gewinde geschnitten werden kann. Blindnietelemente bilden den Gegenflansch - Schließkopf - durch Wulstbildung, also eine Materialfalte. Je geringer die Materialstärke des dünnwandigen Gegenstandes ist, mit dem das Blindnietelement definierter Abmessung zu verbinden ist, desto größer ist der Außendurchmesser des Wulstes. Die radiale Erstreckung ist vorzugsweise relativ gering, bezogen auf den Außendurchmesser des Schaftes des Blindnietelements.

Ein Blindnietelement der eingangs genannten Art ist aus der EP 1 918 596 A1 bekannt. Dort weist der Schaft in einem zentralen Umfangsbereich des Verformungsabschnitts eine Schwächung der Schaftwandung auf. Diese Schwächung wird insbesondere mittels mehrerer Löcher im Schaft erzielt. Aufgrund der Schwächung der Schaftwandung bildet sich nach dem Verformen des Blindnietelements definiert ein Schließkopf in Form eines umlaufenden Wulstes aus.

Die bekannten Blindnietelemente finden Verwendung im Zusammenhang mit einem Gegenstand, der ein kreisförmiges Durchgangsloch zur Aufnahme des Schaftabschnitts des Blindnietelements aufweist. Entsprechend ist die Außenkontur des Schaftabschnitts des Blindnietelements kreisförmig. Der Schaft des Blindnietelements ist im Bereich des Schaftabschnitts mit geringem Umfangsspalt in das Durchgangsloch des Gegenstands einsetzbar. Diese kreisförmige Querschnittsgestaltung bedingt, dass das Blindnietelement nicht, bezüglich dessen Längsachse, drehgesichert im Gegenstand gehalten ist. Eine Verhinderung der Drehung wird durch eine mittels Setzkopf und verformten Schließkopf auf den Gegenstand ausgeübten Kraft bewirkt. Hierbei ist aber eine hohe Flächenpressung zwischen Setzkopf und Gegenstand bzw. Schließkopf und Gegenstand erforderlich.

Aus der US 2010/040433 A1 ist ein Blindnietelement mit einem Setzkopf und einem Schaft bekannt. Der Schaft weist im Bereich seines dem Setzkopf abgewandten Endes ein Innengewinde auf. Benachbart dem Setzkopf weist das Blindnietelement einen Schaftabschnitt auf, in dessen Bereich der Schaft in ein Durchgangsloch eines mit dem Blindnietelement zu verbindenden Gegenstands einführbar ist. Zum drehgesicherten Positionieren des Schaftes im Gegenstand weist der Schaftabschnitt eine Querschnittsform auf, deren äußere Kontur, abweichend von der Form eines Kreises, stetig ist, wobei eine erste Ableitung dieser Kurve stetig ist. Konkret weist der Schaftabschnitt eine elliptische äußere Kontur auf. Diese ist der elliptischen Kontur des Durchgangsloches angepasst.

In der DE 10 2004 042 478 A1 ist ein Verfahren zur verdrehsicheren Befestigung eines Funktionselements in einem Bauteil sowie eine Verbindung zwischen einem Bauteil und einem Funktionselement beschrieben. Hierbei ist im Bauteil ein unrundes Durchgangsloch vorgesehen, in das eine Einpressmutter mit einem als ringförmiger Kragen ausgebildeten Umformbereich eingesetzt wird, der beim Setzen der Einpressmutter an die unrunde Geometrie des Durchgangslochs durch einen Umformprozess angenähert oder angepasst wird.

Aufgabe der vorliegenden Erfindung ist es, ein Blindnietelement der eingangs genannten Art so weiterzubilden, dass es in allen Raumrichtungen sicher am Gegenstand befestigbar ist, ferner eine Anordnung eines Blindnietelements und eines Gegenstands anzugeben, der diese sichere Befestigung gewährleistet.

Gelöst wird die Aufgabe dadurch, dass der Schaftabschnitt eine Querschnittsform aufweist, deren äußere Kontur, abweichend von der Form eines Kreises, stetig ist, wobei eine erste Ableitung dieser Kurve stetig ist, sowie der Schaft zwischen dem Setzkopf und dem das Innengewinde aufweisenden Schaftabschnitt oder der Aufnahme einen identischen Querschnitt aufweist.

Da an die Form der äußeren Kurve, die die Außenkontur des Schaftabschnitts bildet, nicht nur die Anforderung gestellt ist, dass diese stetig ist, sondern auch unter den Aspekten der Geometrie die erste Kurve dieser Ableitung stetig sein soll, ist eine eckige Ausbildung des Außenquerschnitts des Schaftabschnitts des Blindnietelements ausgeschlossen. Andererseits ist auch eine Kreisform der äußeren Kontur des Schaftabschnitts ausgeschlossen.

Durch diese von einer Kreisform abweichende Gestaltung der Querschnittsform des Schaftabschnitts des Blindnietelements ist gewährleistet, dass der Schaft, bei entsprechender Anpassung der Querschnittsform des Durchgangslochs des Gegenstands drehgesichert im Gegenstand angeordnet werden kann, ausschließlich aufgrund des Formschlusses von Schaft und Gegenstand, andererseits aber dieser Formschluss nicht mittels eckiger Ausgestaltung des mit dem Gegenstand zusammenwirkenden Schaftabschnitts erfolgt. Dies ermöglicht es, das Blindnietelement auch mit Gegenständen zu verbinden, die keine Bleche darstellen, insbesondere mit Fasern aufweisenden Kunststoff-Verbundwerkstoffen.

Unter diesem Aspekt schlägt die Erfindung ferner eine Anordnung eines Blindnietelements und eines ein Durchgangsloch aufweisenden Gegenstands zur Aufnahme des Blindnietelements vor, wobei das Blindnietelement so ausgebildet ist, dass der Schaftabschnitt eine Querschnittsform aufweist, deren äußere Kurve, abweichend von der Form eines Kreises, stetig ist, wobei eine erste Ableitung dieser Kurve stetig ist, und ferner das Durchgangsloch des Gegenstandes eine Kontur aufweist, die der Außenkontur des Schaftabschnitts des Blindnietelements in dessen das Durchgangsloch durchsetzenden Bereich entspricht.

Insbesondere ist der Schaft des Blindnietelements im Bereich des Schaftabschnitts mit geringem Umfangsspalt in das Durchgangsloch des Gegenstands einsetzbar.

Der Gegenstand weist insbesondere einen plattenförmigen Abschnitt auf, der das Durchgangsloch zum Einsetzen des Blindnietelements aufweist.

Von besonderer Bedeutung ist der Werkstoff des Gegenstandes. So ist der Gegenstand, zumindest im Bereich der Verbindung mit dem Blindnietelement, durch einen Faser-Kunststoff-Verbundwerkstoff, insbesondere durch einen carbonfaserverstärkten Kunststoff gebildet. Vorzugsweise ist der gesamte Gegenstand durch einen Faser-Kunststoff-Verbundwerkstoff, insbesondere durch einen carbonfaserverstärkten Kunststoff gebildet.

Insbesondere bei einem Faser-Kunststoff-Verbundwerkstoff ist die erfindungsgemäße Gestaltung des Schaftabschnitts des Blindnietelements von besonderem Vorteil, weil weder beim Setzen des Blindnietelements, noch beim Anbringen eines Bauteils, nach dem Setzen des Blindnietelements mit einhergehendem Schraubvorgang, Kräfte in das Blindnietelement eingeleitet werden, die sich über Kanten am Gegenstand abstützen bzw. über Kanten auf diesen Gegenstand einwirken und damit dessen Faserstruktur beschädigen würden. Die Folge wäre, dass nicht von der erforderlichen Festigkeit dieses Gegenstandes ausgegangen werden kann.

Das erfindungsgemäße Blindnietelement ist vorzugsweise so gestaltet, dass die äußere Kontur der Querschnittsform des Schaftabschnitts, abweichend von der Form eines Kreises, eine Ellipse ist oder eine Kurvenform eines Nockens aufweist.

Diese Querschnittsform ist, bezogen auf eine Ebene senkrecht zu einer Längsachse des Schafts bzw. Blindnietelements zu verstehen.

Vorzugsweise ist die äußere Kurve der Querschnittsform des Schaftabschnitts ausschließlich nach außen gewölbt.

Grundsätzlich ist aber auch eine Kurvenform denkbar, die nach außen und nach innen gewölbte Abschnitte aufweist.

Der Schaftabschnitt weist insbesondere mindestens eine derartige Erstreckung in Achsrichtung des Schaftes auf, dass er sich über die Länge des Schaftes, ausgehend vom Setzkopf erstreckt, die der Stärke des Gegenstands im Einsetzbereich des Schaftes entspricht. Der Schaftabschnitt kann sich dessen ungeachtet über eine wesentlich größere Länge erstrecken. Beispielsweise erstreckt sich der Schaftabschnitt vom Setzkopf bis zu dem Bereich des Schaftes, der das Innengewinde aufweist oder die Aufnahme für den Gewindebolzen aufweist. Es ist ferner denkbar, dass der Schaftabschnitt sich über die gesamte Länge des Schafts erstreckt, somit auch über den Verformungsabschnitt und den Bereich des Innengewindes bei der Blindnietmutter bzw. die Aufnahme für den Gewindebolzen, bei Ausbildung als Blindnietgewindebolzen.

Der Setzkopf kann unterschiedliche Formen aufweisen. So weist der Setzkopf beispielsweise eine Querschnittsform auf, deren äußere Kurve und/oder deren innere Kurve ein Kreis ist. Es ist auch denkbar, dass der Setzkopf eine Querschnittsform aufweist, deren äußere Kurve und deren innere Kurve abweichend von der Form eines Kreises, stetig ist, wobei eine erste Ableitung dieser Kurve stetig ist. Diese äußere Kurve ist demzufolge beispielsweise eine Ellipse oder eine äußere Kurve eines Nockens.

Vorzugsweise weist der Setzkopf eine Querschnittsform auf, deren äußere Kurve und/oder deren innere Kurve der Querschnittsform des Schaftabschnitts entspricht.

Der Schaft weist insbesondere zwischen Setzkopf und Gewindeabschnitt nicht nur einen identischen Querschnitt auf, sondern auch über den Umfang eine konstante Wanddicke auf.

Gemäß einer bevorzugten Weiterbildung der Erfindung ist vorgesehen, dass der Schließkopf, der sich beim Setzen des Blindnietelements bildet, als sich an der Außenseite des Schafts in dessen Umfangsrichtung erstreckender Wulst ausgebildet ist, insbesondere ein Wulst, der sich nicht unterbrochen über den gesamten Umfang des Schafts erstreckt. Erreicht wird dies insbesondere dadurch, dass der Schaft in einem zentralen Umfangsbereich des Verformungsabschnitts eine Schwächung der Schaftwandung aufweist. Diese Schwächung kann durch mehrere Löcher im Schaft, insbesondere durch den Schaft durchsetzende Löcher, gebildet sein.

Gemäß einer Weiterbildung ist vorgesehen, dass der Schaft so gestaltet ist, dass er in dem Bereich des Schafts, in dem eine Wulstbildung nicht erfolgen soll, die Bildung des Wulstes durch Entnahme vom Material des Schafts verhindert ist. Dies ermöglicht es, das Blindnietelement auch bei einem Gegenstand einzusetzen, bei dem Grundsätzlich eine Ausbildung des Schließkopfes über den gesamten Umfang des Schaftes, insbesondere über einen Vollkreis nicht erforderlich ist, oder, bei dem eine Ausbildung des Schließkopfes mit einem sich über den gesamten Umfang des Schaftes erstreckenden Wulst nicht gewünscht ist, weil dieser mit einem anderen Gegenstand kollidieren würde.

Die Entnahme des Materials vom Schaft kann auf unterschiedlichste Art und Weise erfolgen und es kann unterschiedlich viel Material vom Schaft entnommen werden, sofern gewährleistet ist, dass sich in dem interessierenden Bereich des Schaftes der Wulst nicht ausbildet. So kann bei der Herstellung des Blindnietelements im interessierenden Bereich Material vom Schaft dadurch entnommen werden, dass beispielsweise beim Pressen eines Rohlings des Blindnietelements eine Ausnehmung in den Schaft eingebracht wird. Andererseits kann bei dem Herstellen des Blindnietelements Material im interessierenden Bereich vom Schaft entfernt werden, beispielsweise durch mechanisches Bearbeiten.

Weiter Merkmale der Erfindung sind in den Unteransprüchen, der Beschreibung der Figuren und den Figuren selbst dargestellt.

In den Figuren ist die Erfindung anhand mehrerer Ausführungsformen für unterschiedliche Anwendungen beispielsweise dargestellt, ohne hierauf beschränkt zu sein.

Es wird ausdrücklich bemerkt, dass folgende Figuren keine Ausführungsformen der Erfindung darstellen: Fig. 3, 4, 8, 9, 12 bis 14, 17 bis 31.

Es zeigt:
- Fig. 1: eine erste Ausführungsform einer Blindnietmutter, in einem Längsmittelschnitt veranschaulicht,
- Fig. 2: eine Ansicht II der Blindnietmutter gemäß Ausführungsform in Fig. 1,
- Fig. 3: eine zweite Ausführungsform einer Blindnietmutter, in einem Längsmittelschnitt veranschaulicht,
- Fig. 4: eine Ansicht IV der in Fig. 3 veranschaulichten Blindnietmutter,
- Fig. 5: einen plattenförmigen Teilabschnitt eines Gegenstandes, der zum Verbinden mit der Blindnietmutter gemäß der ersten oder zweiten Ausführungsform vorgesehen ist, in einer Draufsicht veranschaulicht,
- Fig. 6: die Anordnung von Platte und erster Ausführungsform der Blindnietmutter, veranschaulicht für die linke Hälfte in einem Längsmittelschnitt vor dem Setzen der Blindnietmutter und für die rechte Hälfte nach dem Setzen der Blindnietmutter,
- Fig. 7: eine Ansicht VII gemäß Fig. 6,
- Fig. 8: die Anordnung von Platte und zweiter Ausführungsform der Blindnietmutter, veranschaulicht für die linke Hälfte in einem Längsmittelschnitt vor dem Setzen der Blindnietmutter und für die rechte Hälfte nach dem Setzen der Blindnietmutter,
- Fig. 9: eine Ansicht IX gemäß Fig. 8,
- Fig. 10: eine dritte Ausführungsform einer Blindnietmutter, in einem Längsmittelschnitt veranschaulicht,
- Fig. 11: eine Ansicht XI der Blindnietmutter gemäß Ausführungsform in Fig. 10,
- Fig. 12: eine vierte Ausführungsform einer Blindnietmutter, in einem Längsmittelschnitt veranschaulicht,
- Fig. 13: eine Ansicht XIII der in Fig. 12 veranschaulichten Blindnietmutter,
- Fig. 14: einen plattenförmigen Teilabschnitt eines Gegenstandes, der zum Verbinden mit der Blindnietmutter gemäß der dritten oder vierten Ausführungsform vorgesehen ist, in einer Draufsicht veranschaulicht,
- Fig. 15: die Anordnung von Platte und dritter Ausführungsform der Blindnietmutter, veranschaulicht für die linke Hälfte in einem Längsmittelschnitt vor dem Setzen der Blindnietmutter und für die rechte Hälfte nach dem Setzen der Blindnietmutter,
- Fig. 16: eine Ansicht XVI gemäß Fig. 15,
- Fig. 17: die Anordnung von Platte und vierter Ausführungsform der Blindnietmutter, veranschaulicht für die linke Hälfte in einem Längsmittelschnitt vor dem Setzen der Blindnietmutter und für die rechte Hälfte nach dem Setzen der Blindnietmutter,
- Fig. 18: eine Ansicht XVIII gemäß Fig. 17,
- Fig. 19: eine fünfte Ausführungsform einer Blindnietmutter, veranschaulicht in einem Mittellängsschnitt,
- Fig. 20: eine Ansicht XX gemäß Fig. 19,
- Fig. 21: einen Schnitt gemäß der Linie A-A in Fig. 19,
- Fig. 22: die Anordnung von Platte und Blindnietmutter gemäß der fünften Ausführungsform, in einem Längsmittelschnitt veranschaulicht
- Fig. 23: die Anordnung gemäß Fig. 22, veranschaulicht für die rechte Hälfte für den Zustand der gesetzten Blindnietmutter,
- Fig. 24: eine Ansicht der Anordnung gemäß Pfeil XXIV in Fig. 23,
- Fig. 25: eine sechste Ausführungsform einer Blindnietmutter, veranschaulicht in einem Mittellängsschnitt,
- Fig. 26: eine Ansicht XXVI gemäß Fig. 25,
- Fig. 27: einen Schnitt gemäß der Linie B-B in Fig. 25,
- Fig. 28: die Anordnung von Platte und Blindnietmutter gemäß der sechsten Ausführungsform, in einem Längsmittelschnitt veranschaulicht
- Fig. 29: die Anordnung gemäß Fig. 28, veranschaulicht für die rechte Hälfte für den Zustand der gesetzten Blindnietmutter,
- Fig. 30: eine Ansicht der Anordnung gemäß Pfeil XXX in Fig. 29,
- Fig. 31: eine erste Ausführungsform eines Blindnietgewindebolzens, veranschaulicht für dessen linke Hälfte in einem Längsmittelschnitt und für dessen rechte Hälfte in einer Ansicht,
- Fig. 32: eine zweite Ausführungsform eines Blindnietgewindebolzens, veranschaulicht für dessen linke Hälfte in einem Längsmittelschnitt und für dessen rechte Hälfte in einer Ansicht.

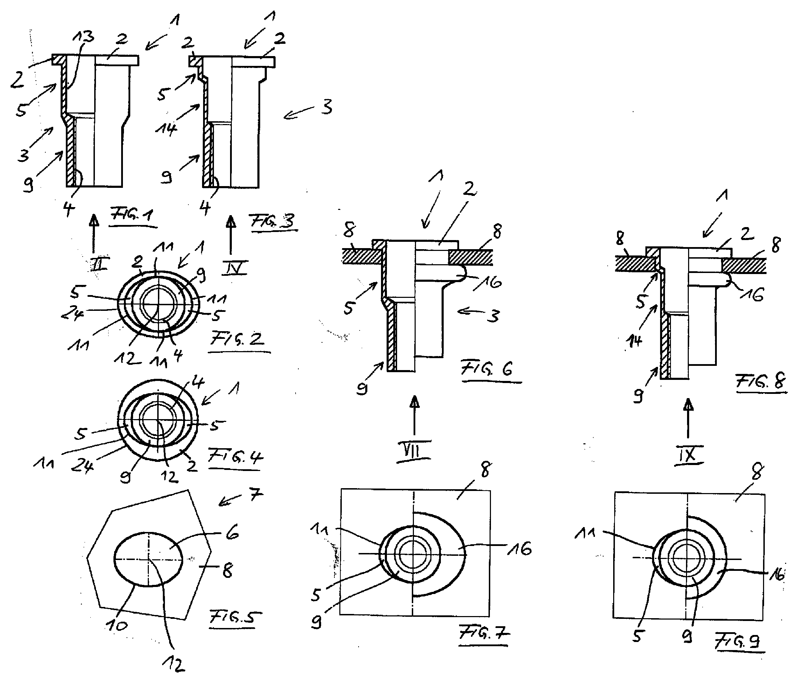

Die Fig. 1 und 2 veranschaulichen ein Blindnietelement, das als Blindnietmutter 1 ausgebildet ist. Diese weist einen Setzkopf 2 und einen Schaft 3 auf. Der Schaft 3 weist im Bereich seines dem Setzkopf 2 abgewandten Endes ein Innengewinde 4 auf. Der Schaft 3 weist ferner, benachbart dem Setzkopf 2, einen Schaftabschnitt 5 auf, in dessen Bereich der Schaft 3 in ein Durchgangsloch 6 eines mit der Blindnietmutter 1 zu verbindenden Gegenstands 7, der teilweise in Fig. 5 veranschaulicht ist, einführbar ist. Veranschaulicht ist bezüglich dieses Gegenstandes 7 nur ein als Platte 8 ausgebildeter Teilbereich des Gegenstands 7, der mit dem Durchgangsloch 6 versehen ist.

Bei der Ausführungsform gemäß der Fig. 1 und 2 schließt sich an den Schaftabschnitt 5, der gegenüber dem Setzkopf 2 einen Rücksprung darstellt, ein Schaftabschnitt 9 an, der gegenüber dem Schaftabschnitt 5 einen Rücksprung darstellt. Dieser Schaftabschnitt 9 ist mit dem Innengewinde 4 versehen.

Das Durchgangsloch 6 weist einen Querschnitt einer Ellipse auf. Demnach ist die das Durchgangsloch 6 begrenzende, geschlossene Kurve 10, abweichend von der Form eines Kreises, stetig ausgebildet, wobei eine erste Ableitung dieser Kurve gleichfalls stetig ist. Entsprechend dieser Querschnittsform des Durchgangslochs 6 ist der Schaft 3 in dem das Durchgangsloch 6 durchsetzenden Schaftabschnitt 5 gestaltet. Der Schaftabschnitt 5 weist eine solche Querschnittsform auf, dass dessen äußere Kurve 11 eine Ellipse ist. Somit ist auch diese Kurve 11, abweichend von der Form eines Kreises, stetig, und ist überdies die erste Ableitung dieser Kurve stetig. Die Ellipsenform der beiden Kurven 10 und 11 ist identisch, wobei die Kurve 10 die Kurve 11 in geringfügigerem Abstand umschließt. Demzufolge ist der Schaftabschnitt 5 der Blindnietmutter 1 mit geringem Umfangsspalt in das Durchgangsloch 6 der Platte 7 einsetzbar. Dies bedeutet, dass der in die Platte 8 eingesteckte Schaft 3 nicht bezüglich der Platte 8, bezogen auf die das Durchgangsloch 6 durchsetzende Längsachse 12, gedreht werden kann. Diese Längesachse 12 ist auch für die Blindnietmutter 1 verdeutlicht.

Bei der ersten Ausführungsform weist der Schaft 3 im Bereich des Schaftabschnitts 5 sowohl eine Außenkontur einer Ellipse, wiedergegeben durch die Kurve 11, als auch eine Innenkontur einer Ellipse auf. Die Innenwandung, die die Innenkontur einer Ellipse aufweist, ist mit der Bezugsziffer 13 veranschaulicht. Dieser, innen und außen elliptische Schaftabschnitt 5 geht erst mit dem Übergang zum Schaftabschnitt 9, der das Innengewinde 4 aufweist, in die kreisförmige Gestaltung des Schaftes 3 über.

Bei der Ausführungsform gemäß der Fig. 1 und 2 weist auch der Setzkopf 2 eine äußere und innere elliptische Kontur auf.

Die Ausführungsform nach den Fig. 3 und 4 unterscheidet sich von derjenigen nach den Fig. 1 und 2 dadurch, dass der Setzkopf 2 eine äußere kreisförmige Kontur aufweist und der Schaftabschnitt 5, der innen und außen elliptisch ausgebildet ist, sich nur über eine kurze Länge erstreckt, die im Wesentlichen der Stärke der Platte 8 entspricht. An diesen axial kurzen Schaftabschnitt 5 schließt sich ein Zwischenabschnitt 14 an, der somit den Schaftabschnitt 5 und den Schaftabschnitt 9 miteinander verbindet, wobei dieser Zwischenabschnitt 14 einen inneren und einen äußeren kreisförmigen Querschnitt aufweist, wobei der Außendurchmesser des Zwischenabschnitts 14 dem Außendurchmesser des Schaftabschnitts 9 entspricht. Der Querschnitt des Schaftabschnitts 5 gemäß der zweiten Ausführungsform ist entsprechend dem Querschnitt des Schaftabschnitts 5 der ersten Ausführungsform ausgebildet.

Die Fig. 6 und 7 zeigt eine Blindnietmutter 1 gemäß der ersten Ausführungsform (Fig. 1 und 2), die in eine Platte 8 gemäß der Ausführungsform nach Fig. 5 eingesteckt ist. Der linke Bereich der jeweiligen Fig. 6 bzw. 7 veranschaulicht die eingesteckte Blindnietmutter 1 vor dem Vernieten, die rechte Darstellung der jeweiligen Fig. 6 bzw. 7 die Blindnietmutter 1 nach dem Vernieten.

Die Fig. 8 und 9 sind den Fig. 6 und 7 entsprechende Darstellungen, allerdings für die zweite Ausführungsform gemäß der Fig. 3 und 4, die in die Platte 8 gemäß Ausführungsform nach Fig. 5 eingesetzt ist.

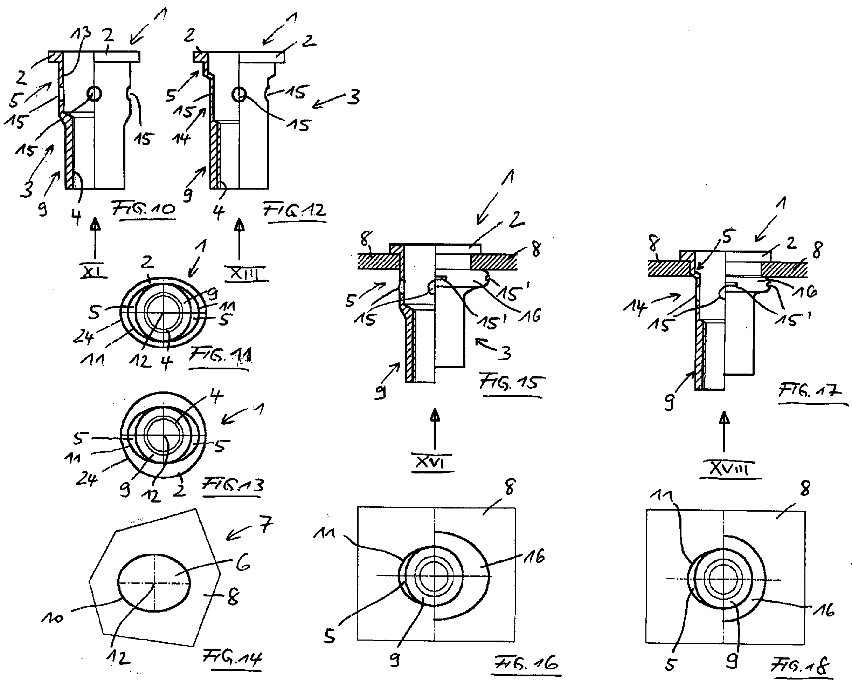

Bezüglich der dritten Ausführungsform gemäß der Fig. 10, 11, 14, 15 und 16 wird auf die vorliegende Beschreibung zur ersten Ausführungsform gemäß der Fig. 1, 2, 5, 6 und 7 verwiesen, ferner zur vierten Ausführungsform gemäß der Fig. 12, 13, 14, 17 und 18 auf die vorstehenden Ausführungen zur zweiten Ausführungsform gemäß der Fig. 3, 4, 5, 8 und 9 verwiesen. Der Unterschied der dritten und vierten Ausführungsform bezüglich der ersten und zweiten Ausführungsform besteht nur darin, dass die Blindnietmutter 1 im Bereich des Schaftabschnitts 5 betreffend die dritte Ausführungsform, in Abstand zu dem Bereich, in dem der Schaftabschnitt 5 die Platte 8 kontaktiert, der Schaftabschnitt 5 mit vier jeweils um 90° zueinander angeordneten Durchgangslöchern 15 versehen ist, die auf einer identischen, senkrecht zur Achse 12 angeordneten Ebene, die Schaftwandung des Schaftabschnitts 5 schwächen. Bei der vierten Ausführungsform findet diese Schwächung mittels der vier Durchgangslöcher 15 im Bereich des Zwischenabschnitts 14 statt. Die Durchgangslöcher 15 bedingen beim Setzen der Blindnietmutter 1 deren definierte Verformung aufgrund der definierten Schwächung des Schaftabschnitts 5 mittels der Durchgangslöcher 15. Beim Setzen der Blindnietmutter 1 verformen sich diese im Verformungsabschnitt befindlichen Durchgangslöcher 15, so dass sich nach dem Setzen der Blindnietmutter 1 diese Durchgangslöcher 15 als schmale, insbesondere geschlossene Schlitze 15' darstellen. Mit der Bezugsziffer 16 ist der beim Setzen der Blindnietmutter 1 gebildete Schließkopf bezeichnet. Zwischen diesem und dem Setzkopf 2 ist die Platte 8 in Richtung der Achse 12 fixiert.

Bei der ersten und dritten Ausführungsform ergibt sich eine elliptische Ausbildung des Wulstes 16, bei der zweiten und vierten Ausführungsform eine kreisförmige Ausbildung des Wulstes 16.

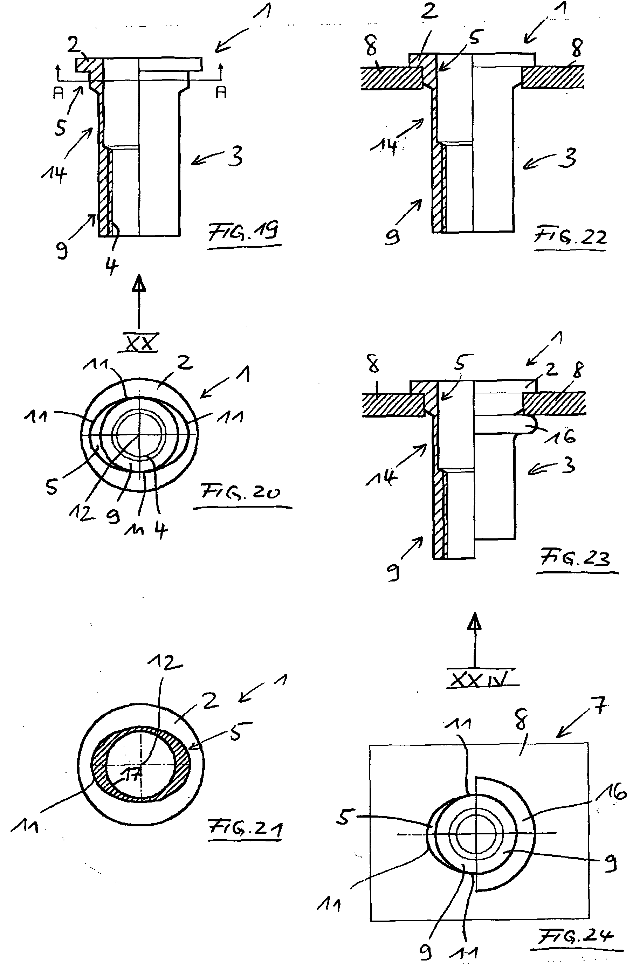

Während bei der ersten bis vierten Ausführungsform die Wandstärke des Schaftes 3 zwischen Setzkopf 2 und dem das Innengewinde 4 aufweisenden Schaftabschnitt 9, über die Achserstreckung der Blindnietmutter 1 konstant ist, veranschaulicht die fünfte Ausführungsform gemäß der Fig. 19 bis 24 eine Modifizierung der Blindnietmutter 1 dahingehend, dass die Kurve 11 des zwischen den Setzkopf 2 und dem Zwischenabschnitt 14 angeordneten Schaftabschnitts 5, somit die die Außenkontur des Querschnitts dieses Schaftabschnitts 5 definierende Kurve elliptisch ausgestaltet ist, hingegen in diesem Schaftabschnitt 5 dessen Innenkontur gemäß der Kurve 17 kreisförmig ist. Die Außenkontur des Setzkopfes 2 ist kreisförmig. Bei dieser Ausführungsform weist der Schaft 3 im Übrigen einen sich konisch verlaufenden Übergang vom Schaftabschnitt 5 zum Zwischenabschnitt 14 auf. Hierbei ist der Schaftabschnitt 5 so gestaltet, dass er eine kürzere axiale Erstreckung aufweist als die Dicke der Platte 8, wobei der Schaftabschnitt 9 sich unmittelbar an den Setzkopf 2 anschließt. Auch bei dieser Gestaltung ist eine Verdrehsicherung der Blindnietmutter 1 bezüglich der Platte 8 bereits vor dem Setzen der Blindnietmutter 1 gewährleistet.

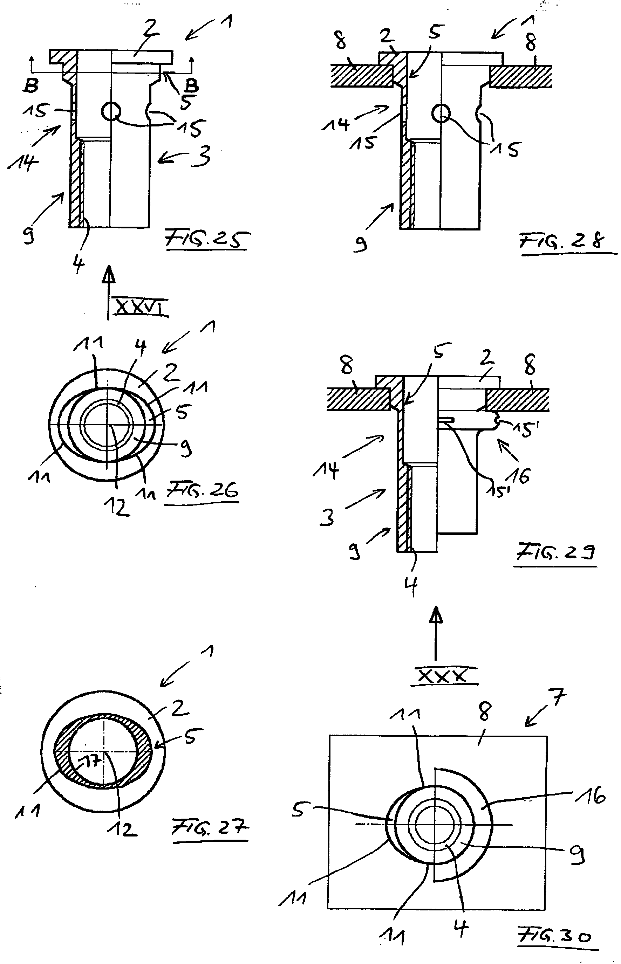

Die sechste Ausführungsform gemäß der Fig. 25 bis 30 unterscheidet sich von derjenigen der fünften Ausführungsform nach den Fig. 19 bis 24 nur dadurch, dass der Zwischenabschnitt 14 mit den erörterten vier Durchgangslöchern 15 versehen ist, die nach Ausbildung des Schließkopfes 16 als Schlitze 15' gestaltet sind.

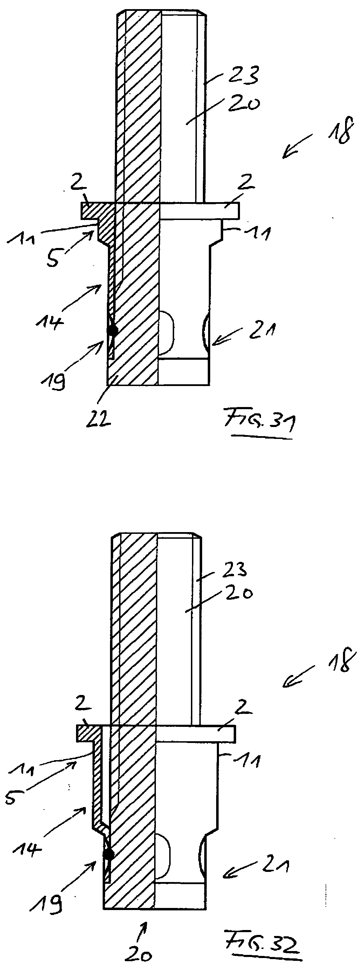

Die Fig. 31 und 32 sollen veranschaulichen, dass die erfindungsgemäße Gestaltung durchaus auch bei einem Blindnietelement verwirklicht werden kann, das als Blindnietgewindebolzen 18 ausgebildet ist. Bei diesem weist der Schaft 3 im Bereich seines dem Setzkopf 2 abgewandten Endes eine Aufnahme 19 für einen Gewindebolzen 20 auf. Der Gewindebolzen 20 weist einen gewindelosen, gestuften Endabschnitt 21 auf, dessen erweiterter Bereich 22 die Aufnahme 19 des Schaftes 3 kontaktiert. Im Bereich der Aufnahme 19 weist der Schaft 3 radial nach innen gewölbte Bereiche auf, die den Endabschnitt 21 des Gewindebolzens 20 im Bereich des reduzierten Durchmessers des Endabschnitts 21 kontaktieren. Dort ist der Schaft 3 mit dem Gewindebolzen 20 verschweißt. Der mit dem Schaft 3 verschweißte Gewindebolzen 20 weist, abgesehen von seinem Bereich des Endabschnitts 21, ein Außengewinde 23 auf, auf das, zum Setzen des Blindnietgewindebolzens 18, ein geeignetes Werkzeug mit einer axial verschiebbaren Mutter aufschraubbar ist.

Mit Ausführungsformen der Blindnietmutter 1 übereinstimmende Teile des Blindnietgewindebolzens 18, insbesondere dessen Schafts 3 und dessen Setzkopfs 2, sind der Einfachheit halber mit denselben Bezugsziffern bezeichnet.

Bei der Ausführungsform gemäß der Fig. 31 ist der, eine elliptische Kurve 11 aufweisende Schaftabschnitt 5 kurz ausgebildet, so dass dieser Schaftabschnitt 5 zwischen dem Schaft 3 und dem Zwischenabschnitt 14 angeordnet ist, entsprechend der Ausführungsform der Blindnietmutter 1 gemäß der Fig. 19 bis 24. Demnach ist der Schaftabschnitt 5 außen elliptisch gestaltet und innen kreisrund.

Bei der Ausführungsform nach der Fig. 32 weist der Blindnietgewindebolzen 18 keinen Zwischenabschnitt 14 auf, sondern es grenzt an den Schaftabschnitt 5 einerseits der Setzkopf 2, andererseits die Aufnahme 19. In diesem Fall ist sowohl die Innenkontur von Schaftabschnitt 5 und Setzkopf 2 als auch die Außenkontur des Schaftabschnitts 5 elliptisch gestaltet.

Die Außenkontur des Setzkopfes 2 ist bei den Ausführungsformen gemäß Fig. 31 und 32 elliptisch oder kreisförmig gestaltet.

Der Gegenstand 7, zumindest dessen Platte 8, ist durch einen Faser-Kunststoff-Verbundwerkstoff, insbesondere durch einen carbonfaserverstärkten Kunststoff gebildet. Dieser besondere Faser-Verbundwerkstoff findet somit insbesondere in dem Bereich Verwendung, in dem das Blindnietelement 1 bzw. 18 mit dem Gegenstand 7 verbunden ist. Hierdurch ist einerseits eine drehfeste Anordnung des Blindnietelements in der Platte 8 gewährleistet, andererseits wird eine Beschädigung der aus diesem besonderen Material bestehenden Platte aufgrund der erfindungsgemäßen Gestaltung des Blindnietelements, verhindert.

## Patentansprüche

1. Blindnietelement (1, 18) mit einem Setzkopf (2) und einem Schaft (3), wobei der Schaft (3) im Bereich seines dem Setzkopf (2) abgewandten Endes ein Innengewinde (4) aufweist, oder eine Aufnahme (19) für einen Gewindebolzen (20) aufweist, sowie benachbart dem Setzkopf (2) einen Schaftabschnitt (5) aufweist, in dessen Bereich der Schaft (3) in ein Durchgangsloch (6) eines mit dem Blindnietelement (1, 18) zu verbindenden Gegenstands (7) einführbar ist, sowie benachbart dem Innengewinde (4) oder der Aufnahme (19) für den Gewindebolzen (20) einen Verformungsabschnitt zur Ausbildung eines Schließkopfes (16) zur Anlage am Gegenstand (7) beim Setzen des Blindnietelements (1, 18) aufweist, **dadurch gekennzeichnet, dass** der Schaftabschnitt (5) eine Querschnittsform aufweist, deren äußere Kontur (11), abweichend von der Form eines Kreises, stetig ist, wobei eine erste Ableitung dieser Kurve (11) stetig ist, sowie der Schaft (3) zwischen dem Setzkopf (2) und dem das Innengewinde (4) aufweisenden Schaftabschnitt (9) oder der Aufnahme (19) einen identischen Querschnitt aufweist.

2. Blindnietelement nach Anspruch 1, **dadurch gekennzeichnet, dass** die äußere Kurve (11) der Querschnittsform des Schaftabschnitts (5), abweichend von der Form eines Kreises, eine Ellipse oder eine Kurvenform eines Nockens ist.

3. Blindnietelement nach Anspruch 1 oder 2, **dadurch gekennzeichnet, dass** die äußere Kurve (11) der Querschnittsform des Schaftabschnitts (5) ausschließlich nach außen gewölbt ist.

4. Blindnietelement nach einem der Ansprüche 1 bis 3, **dadurch gekennzeichnet, dass** der Schaftabschnitt (5) mindestens eine derartige Erstreckung in Achsrichtung (12) des Schafts (3) besitzt, dass er sich über eine solche Länge des Schafts (3), ausgehend vom Setzkopf (2), erstreckt, die der Stärke des Gegenstands (7) im Einsetzbereich des Schafts (3) entspricht, insbesondere der Schaftabschnitt (5) sich vom Setzkopf (2) bis zu dem Bereich des Schafts (3) erstreckt, der das Innengewinde (4) aufweist oder die Aufnahme (19) für den Gewindebolzen (20) aufweist, oder der Schaftabschnitt sich über die gesamte Länge des Schafts (3) erstreckt.

5. Blindnietelement nach einem der Ansprüche 1 bis 4, **dadurch gekennzeichnet, dass** der Setzkopf (2) eine Querschnittsform aufweist, deren äußere Kurve (24) und/oder deren innere Kurve (13) ein Kreis ist.

6. Blindnietelement nach einem der Ansprüche 1 bis 4, **dadurch gekennzeichnet, dass** der Setzkopf (2) eine Querschnittsform aufweist, deren äußere Kurve (24) und /oder deren innere Kurve (13), abweichend von der Form eines Kreises, stetig ist, wobei die erste Ableitung der Kurve (24 bzw. 13) stetig ist.

7. Blindnietelement nach Anspruch 6, **dadurch gekennzeichnet, dass** der Setzkopf (2) eine Querschnittsform aufweist, deren äußere Kurve (24) und/oder deren innere Kurve (13) der Gestalt der äußeren Kurve (11) und/oder der inneren Kurve (13) des Schaftabschnitts (5) entspricht.

8. Blindnietelement nach einem der Ansprüche 1 bis 7, **dadurch gekennzeichnet, dass** der Schaft (3), zwischen dem Setzkopf (2) und dem das Innengewinde (4) aufweisenden Schaftabschnitt (9) oder der Aufnahme (19), über den Umfang eine konstante Wanddicke aufweist.

9. Blindnietelement nach einem der Ansprüche 1 bis 8, **dadurch gekennzeichnet, dass** der Schließkopf (16) als sich an der Außenseite des Schafts (3) in dessen Umfangsrichtung erstreckender Wulst ausgebildet ist, insbesondere der Wulst sich, nicht unterbrochen, über den gesamten Umfang des Schafts (3) erstreckt.

10. Blindnietelement nach einem der Ansprüche 1 bis 9, **dadurch gekennzeichnet, dass** der Schaft (3) in einem zentralen Umfangsbereich des Verformungsabschnitts eine Schwächung der Schaftwandung aufweist, insbesondere die Schwächung durch mehrere Löcher (15) im Schaft (3) insbesondere durch mehrere den Schaft (3) durchsetzende Löcher (15) gebildet ist.

11. Blindnietelement nach einem der Ansprüche 1 bis 10, **dadurch gekennzeichnet, dass** der Schaft (3) derart gestaltet ist, dass in dem Bereich des Schafts (3), in dem eine Wulstbildung nicht erfolgen soll, die Bildung des Wulstes (16) durch Entnahme von Material des Schafts (3) verhindert ist.

12. Anordnung eines Blindnietelements (1, 18) und eines ein Durchgangsloch (6) aufweisenden Gegenstands (7) zur Aufnahme des Blindnietelements (1, 18), wobei das Blindnietelement (1, 18) entsprechend einem oder mehreren der Ansprüche 1 bis 11 ausgebildet ist und das Durchgangsloch (6) eine Kontur aufweist, die der Außenkontur (11) des Schaftabschnitts (5) in dessen das Durchgangsloch (6) durchsetzenden Bereich entspricht.

13. Anordnung nach Anspruch 12, **dadurch gekennzeichnet, dass** der Schaft (3) des Blindnietelements (1, 18) im Bereich des Schaftabschnitts (5) mit geringem Umfangsspalt in das Durchgangsloch (6) des Gegenstands (7) einsetzbar ist.

14. Anordnung nach Anspruch 12 oder 13, **dadurch gekennzeichnet, dass** der Gegenstand (7) einen plattenförmigen Abschnitt (8) aufweist, der das Durchgangsloch (6) zum Einsetzen des Blindnietelements (1, 18) aufweist.

15. Anordnung nach einem der Ansprüche 12 bis 14, **dadurch gekennzeichnet, dass** der Gegenstand (7), insgesamt oder zumindest im Bereich der Verbindung mit dem Blindnietelement (1, 18) durch einen Faser-Kunststoff-Verbundwerkstoff, insbesondere durch einen carbonfaserverstärkten Kunststoff, gebildet ist.

## Claims

1. Blind rivet element (1, 18) having a setting head (2) and a shank (3), wherein the shank (3) has an internal thread (4) in the region of its end remote from the setting head (2), or has a receptacle (19) for a threaded bolt (20), and has, next to the setting head (2), a shank portion (5), in the region of which the shank (3) is introducible into a through-hole (6) of an object (7) to be connected by way of the blind rivet element (1, 18), and has, next to the internal thread (4) or the receptacle (19) for the threaded bolt (20), a deformation portion for forming a closing head (16) for abutment against the object (7) during the setting of the blind rivet element (1, 18), **characterized in that** the shank portion (5) has a cross-sectional shape, the external contour (11) of which, differing from a circular shape, is constant, wherein a first derivative of this curve (11) is constant, and the shank (3) has an identical cross section between the setting head (2) and the receptacle (19) or the shank portion (9) having the internal thread (4).

2. Blind rivet element according to Claim 1, **characterized in that** the external curve (11) of the cross-sectional shape of the shank portion (5), differing from a circular shape, is an ellipse or a curved shape of a cam.

3. Blind rivet element according to Claim 1 or 2, **characterized in that** the external curve (11) of the cross-sectional shape of the shank portion (5) is curved exclusively towards the outside.

4. Blind rivet element according to one of Claims 1 to 3, **characterized in that** the shank portion (5) has at least such an extent in the axial direction (12) of the shank (3) that it extends along such a length of the shank (3), starting from the setting head (2), as corresponds to the thickness of the object (7) in the insertion region of the shank (3), in particular the shank portion (5) extends from the setting head (2) to the region of the shank (3) that has the internal thread (4) or has the receptacle (19) for the threaded bolt (20), or the shank portion extends along the entire length of the shank (3).

5. Blind rivet element according to one of Claims 1 to 4, **characterized in that** the setting head (2) has a cross-sectional shape, the external curve (24) of which and/or the internal curve (13) of which is a circle.

6. Blind rivet element according to one of Claims 1 to 4, **characterized in that** the setting head (2) has a cross-sectional shape, the external curve (24) of which and/or the internal curve (13) of which, differing from a circular shape, is constant, wherein the first derivative of the curve (24 and/or 13) is constant.

7. Blind rivet element according to Claim 6, **characterized in that** the setting head (2) has a cross-sectional shape, the external curve (24) of which and/or the internal curve (13) of which corresponds to the shape of the external curve (11) and/or the internal curve (13) of the shank portion (5).

8. Blind rivet element according to one of Claims 1 to 7, **characterized in that** shank (3) has a constant wall thickness around its circumference between the setting head (2) and the receptacle (19) or the shank portion (9) having the internal thread (4).

9. Blind rivet element according to one of Claims 1 to 8, **characterized in that** the closing head (16) is configured as a bead that extends on the external side of the shank (3) in the circumferential direction thereof, in particular the bead extends, uninterruptedly, around the entire circumference of the shank (3).

10. Blind rivet element according to one of Claims 1 to 9, **characterized in that** the shank (3) has a weakening of the shank wall in a central circumferential region of the deformation portion, in particular the weakening is formed by a plurality of holes (15) in the shank (3), in particular by a plurality of holes (15) passing through the shank (3).

11. Blind rivet element according to one of Claims 1 to 10, **characterized in that** the shank (3) is designed such that, in the region of the shank (3) in which bead formation is not intended to occur, the formation of the bead (16) is prevented by removal of material of the shank (3).

12. Arrangement of a blind rivet element (1, 18) and of an object (7) having a through-hole (6) for receiving the blind rivet element (1, 18), wherein the blind rivet element (1, 18) is configured as per one or more of Claims 1 to 11 and the through-hole (6) has a contour which corresponds to the external contour (11) of the shank portion (5) in its region that passes through the through-hole (6).

13. Arrangement according to Claim 12, **characterized in that** the shank (3) of the blind rivet element (1, 18) is insertable, in the region of the shank portion (5), with a slight circumferential clearance into the through-hole (6) of the object (7).

14. Arrangement according to Claim 12 or 13, **characterized in that** the object (7) has a platelike portion (8) which has the through-hole (6) for inserting the blind rivet element (1, 18).

15. Arrangement according to one of Claims 12 to 14, **characterized in that** the object (7), as a whole or at least in the region of the connection by way of the blind rivet element (1, 18), is formed by a fibre-reinforced plastics material, in particular by a carbon-fibre-reinforced plastics material.

## Revendications

1. Elément de rivet aveugle (1, 18) comprenant une tête d'engagement (2) et une tige (3), la tige (3) présentant, dans la région de son extrémité opposée à la tête d'engagement (2), un filetage intérieur (4), ou un logement (19) pour un boulon fileté (20), ainsi qu'à côté de la tête d'engagement (2), une portion de tige (5) dans la région de laquelle la tige (3) peut être introduite dans un trou traversant (6) d'un objet (7) à connecter à l'élément de rivet aveugle (1, 18), ainsi qu'à côté du filetage intérieur (4) ou du logement (19) pour le boulon fileté (20), une portion de déformation pour réaliser une tête de fermeture (16) destinée à s'appliquer contre l'objet (7) lors de l'engagement de l'élément de rivet aveugle (1, 18), **caractérisé en ce que** la portion de tige (5) présente une forme en section transversale dont le contour extérieur (11), s'écartant de la forme d'un cercle, est continu, une première dérivée de cette courbe (11) étant constante, et la tige (3) entre la tête d'engagement (2) et la portion de tige (9) présentant le filetage interne (4) ou le logement (19) présentant une section transversale identique.

2. Élément de rivet aveugle selon la revendication 1, **caractérisé en ce que** la courbe extérieure (11) de la forme en section transversale de la portion de tige (5), s'écartant de la forme d'un cercle, est une ellipse ou une forme courbe d'une came.

3. Élément de rivet aveugle selon la revendication 1 ou 2, **caractérisé en ce que** la courbe extérieure (11) de la forme en section transversale de la portion de tige (5) est cintrée exclusivement vers l'extérieur.

4. Élément de rivet aveugle selon l'une quelconque des revendications 1 à 3, **caractérisé en ce que** la portion de tige (5) possède au moins une étendue dans la direction axiale (12) de la tige (3) telle qu'elle s'étende sur une longueur de la tige (3), à partir de la tête d'engagement (2), qui correspond à l'épaisseur de l'objet (7) dans la région d'insertion de la tige (3), en particulier la portion de tige (5) s'étend depuis la tête d'engagement (2) jusqu'à la région de la tige (3) qui présente le filetage intérieur (4) ou le logement (19) pour le boulon fileté (20), ou la portion de tige s'étend sur toute la longueur de la tige (3).

5. Élément de rivet aveugle selon l'une quelconque des revendications 1 à 4, **caractérisé en ce que** la tête d'engagement (2) présente une forme en section transversale dont la courbe extérieure (24) et/ou la courbe intérieure (13) est/sont un cercle.

6. Élément de rivet aveugle selon l'une quelconque des revendications 1 à 4, **caractérisé en ce que** la tête d'engagement (2) présente une forme en section transversale dont la courbe extérieure (24) et/ou la courbe intérieure (13), s'écartant de la forme d'un cercle, est/sont constante(s), la première dérivée de la courbe (24, respectivement 13), étant constante.

7. Élément de rivet aveugle selon la revendication 6, **caractérisé en ce que** la tête d'engagement (2) présente une forme en section transversale dont la courbe extérieure (24) et/ou la courbe intérieure (13) correspond(ent) à la forme de la courbe extérieure (11) et/ou de la courbe intérieure (13) de la portion de tige (5).

8. Élément de rivet aveugle selon l'une quelconque des revendications 1 à 7, **caractérisé en ce que** la tige (3), entre la tête d'engagement (2) et la portion de tige (9) présentant le filetage intérieur (4) ou le logement (19), présente sur la périphérie une épaisseur de paroi constante.

9. Élément de rivet aveugle selon l'une quelconque des revendications 1 à 8, **caractérisé en ce que** la tête de fermeture (16) est réalisée sous la forme d'un bourrelet s'étendant au niveau du côté extérieur de la tige (3) dans sa direction périphérique, en particulier le bourrelet s'étend de manière ininterrompue sur toute la périphérie de la tige (3).

10. Élément de rivet aveugle selon l'une quelconque des revendications 1 à 9, **caractérisé en ce que** la tige (3), dans une région périphérique centrale de la portion de déformation, présente un affaiblissement de la paroi de tige, en particulier l'affaiblissement est formé par plusieurs trous (15) dans la tige (3), en particulier par plusieurs trous (15) traversant la tige (3).

11. Élément de rivet aveugle selon l'une quelconque des revendications 1 à 10, **caractérisé en ce que** la tige (3) est configurée de telle sorte que, dans la région de la tige (3) dans laquelle ne doit pas se former de bourrelet, la formation du bourrelet (16) est empêchée par un enlèvement de matière de la tige (3).

12. Agencement d'un élément de rivet aveugle (1, 18) et d'un objet (7) présentant un trou traversant (6) pour recevoir l'élément de rivet aveugle (1, 18), l'élément de rivet aveugle (1, 18) étant réalisé selon l'une quelconque ou plusieurs des revendications 1 à 11 et le trou traversant (6) présentant un contour qui correspond au contour extérieur (11) de la portion de tige (5) dans sa région traversant le trou traversant (6).

13. Agencement selon la revendication 12, **caractérisé en ce que** la tige (3) de l'élément de rivet aveugle (1, 18), dans la région de la portion de tige (5), peut être insérée avec un faible interstice périphérique dans le trou traversant (6) de l'objet (7).

14. Agencement selon la revendication 12 ou 13, **caractérisé en ce que** l'objet (7) présente une portion (8) en forme de plaque qui présente le trou traversant (6) pour l'insertion de l'élément de rivet aveugle (1, 18).

15. Agencement selon l'une quelconque des revendications 12 à 14, **caractérisé en ce que** l'objet (7) est formé dans son ensemble ou au moins dans la région de la connexion à l'élément de rivet aveugle (1, 18), par un matériau composite en plastique renforcé par des fibres, en particulier par un plastique renforcé par des fibres de carbone.
